# EUROPÄISCHE PATENTSCHRIFT

(11) **EP 2 914 525 B1**
(45) Veröffentlichungstag und Bekanntmachung des Hinweises auf die Patenterteilung: **25.05.2016**
(21) Anmeldenummer: 13783576.5
(22) Anmeldetag: 28.10.2013
(51) Int. Cl.: F16B 2/04, B65H 75/24, B65H 16/02, F16B 2/18

(54) **KLEMMVORRICHTUNG FÜR FOLIENROLLEN**
CLAMPING DEVICE FOR FILM ROLLS
DISPOSITIF DE SERRAGE POUR ROULEAU DE FILM

(30) Priorität: 31.10.2012 DE 102012110434
(43) Veröffentlichungstag der Anmeldung: 09.09.2015
(73) Patentinhaber: Leonhard Kurz Stiftung & Co. KG, 90763 Fürth (DE)
(72) Erfinder: BIEBER, Reinhard, 91189 Rohr (DE)
(74) Vertreter: Louis Pöhlau Lohrentz
(86) Internationale Anmeldenummer: PCT/EP2013/072536
(87) Internationale Veröffentlichungsnummer: WO 2014/067910

(56) Entgegenhaltungen:
- DE-A1- 2 344 706
- DE-C- 853 905
- GB-A- 2 272 428
- US-A- 2 922 592

## Beschreibung

Die Erfindung betrifft eine Klemmvorrichtung zur Aufnahme und Klemmung einer Folienrolle.
An Heißprägemaschinen, Kaltprägemaschinen, an Folienvorschubgeräten für das Inmold-Verfahren oder für Folienumspulungen während der Konfektion besteht die Aufgabe, Folienrollen schnell und mit geringstem Aufwand zu wechseln. Die Folienrollen umfassen eine Wickelhülse und eine auf der Wickelhülse aufgewickelte Folienbahn.
Es ist bekannt, die Folienrollen mittels Stahlkrallen auf Aufnahmewellen zu befestigen, wobei die Stahlkrallen mittels Muskelkraft in die Wickelhülse aus Pappe oder Kunststoff der Folienrolle eingedrückt werden, um die Wickelhülse auf der Aufnahmewelle zu fixieren.
US 2 922 592 A offenbart eine Klemmvorrichtung gemäß dem Oberbegriff des Anspruchs 1.

Aufgabe der Erfindung ist es, eine Klemmvorrichtung zu entwickeln, die ein Klemmen mit verringertem Zeit- und Bedienungsaufwand ermöglicht. Erfindungsgemäß wird diese Aufgabe mit dem Gegenstand des Anspruchs 1 gelöst. Es wird eine Klemmvorrichtung zur Aufnahme und Klemmung einer Folienrolle, umfassend eine Wickelhülse und einen auf der Wickelhülse angeordneten Folienwickel, vorgeschlagen, wobei die Klemmvorrichtung von einer Offenstellung, in der die Folienrolle in die Klemmvorrichtung einsetzbar oder aus der Klemmvorrichtung entnehmbar ist, in eine Klemmstellung, in der die Folienrolle in der Klemmvorrichtung geklemmt ist, verstellbar ist, wobei vorgesehen ist, dass die Klemmvorrichtung eine Nutwelle mit im gleichen Winkelabstand versetzt in Längsrichtung angeordneten Aufnahmenuten, ein aus einem Gewindering und einer Stellmutter gebildetes Schraubgetriebe und im gleichen Winkelabstand versetzt radial angeordnete Klemmhebel umfasst, wobei ein Abtriebsglied des Schraubgetriebes mit den Klemmhebeln so zusammenwirkt, dass die Klemmhebel in der Klemmstellung der Klemmvorrichtung unter Ausbildung einer Klemmkraft auf dem Boden der Nuten der Nutwelle und auf der Innenwand der Wickelhülse aufliegen.
Die erfindungsgemäße Klemmvorrichtung weist den Vorteil auf, dass sie ohne Werkzeuge bedienbar ist und durch die im gleichen Winkelabstand versetzte Anordnung der Klemmhebel die Folienrolle auf der Klemmvorrichtung zentriert.

Erfindungsgemäß weist die Nutwelle drei um 120° versetzt in Längsrichtung angeordneten Aufnahmenuten auf, in die drei um 120° versetzt radial angeordnete Klemmhebel eingreifen. Der Gewindering weist drei um 120° versetzte radial angeordnete nutförmige Lagerausnehmungen auf, die Drehlager für die Klemmhebel bilden, und dass die Stellmutter an ihrem Außenumfang drei um 120° versetzte nutförmige Stellausnehmungen aufweist, in die die Klemmhebel eingreifen.

Eine derartige Anordnung von drei Aufnahmenuten und entsprechend drei darin eingreifenden Klemmhebeln, gleichmäßig am Umfang verteilt (3 x 120° = 360°), wirkt in vorteilhafter Weise selbstzentrierend auf die Klemmvorrichtung, sodass Verkantungen oder andere eine feste Klemmung behindernde Fehlpositionierungen vermieden werden können.

Es kann vorgesehen sein, dass die Stellmutter das Abtriebsglied des Schraubgetriebes ist.

Die Klemmhebel können als T-förmige Winkelhebel mit einem ersten und einem zweiten Hebelarm ausgebildet sein, wobei der zweite Hebelarm von dem ersten Hebelarm absteht und den ersten Hebelarm in ein längeres und ein kürzeres Teilstück unterteilt.
Es kann vorgesehen sein, dass der Endabschnitt des längeren Teilstücks des ersten Hebelarms des Klemmhebels als ein hervorspringendes Druckstück ausgebildet ist, das in der Klemmstellung der Klemmvorrichtung auf der Innenwand der Wickelhülse aufliegt, dass das kürzere Teilstück des ersten Hebelarms des Klemmhebels einen bogenförmigen Endabschnitt aufweist, der in der Klemmstellung der Klemmvorrichtung auf dem Boden der Nut der Nutwelle aufliegt, dass ein bogenförmig hervorspringender Mittelabschnitt des zweiten Hebelarms des Klemmhebels in die nutförmige Lagerausnehmung des Gewinderings eingreift, und dass der Endabschnitt des zweiten Hebelarms des Klemmhebels in die Stellausnehmung der Stellmutter eingreift. Der Klemmhebel kann vorteilhafterweise als ein Stanzteil ausgebildet ist, beispielsweise aus Stahlblech.

Die Gewinde des Gewinderings und der Stellmutter können als selbsthemmende Gewinde ausgebildet sind. Das dadurch ausgebildete selbsthemmende Schraubgetriebe hat den Vorteil, dass es durch axiale Kräfte nicht in eine Offenlage bringbar ist.

Weiter kann vorgesehen sein, dass die Klemmvorrichtung eine vordere Stellscheibe und eine der Folienrolle zugewandte hintere Stellscheibe aufweist, wobei die vordere Stellscheibe mit der Stellmutter und die hintere Stellscheibe mit dem Gewindering drehstarr verbunden ist. Mit Hilfe dieser Stellscheiben mit vorzugsweise größerem Durchmesser als die Stellmutter und der Gewindering kann die Klemmvorrichtung manuell mit geringem Kraftaufwand bedient werden. Durch die jeweils größeren, beispielsweise doppelten oder dreifachen Durchmesser der Stellscheiben im Vergleich zu Stellmutter und Gewindering kann manuell am Umfang der Stellscheiben angegriffen werden und dadurch mehr Kraft auf die innenliegende Stellmutter und den Gewindering ausgeübt werden.

Die vordere Stellscheibe kann vorteilhafterweise einen kleineren Durchmesser aufweisen als die hintere Stellscheibe. Dadurch ist es bei der manuellen Bedienung leichter, beide Stellscheiben gleichzeitig zu bedienen, auch wenn diese nahe beieinander angeordnet sind. Außerdem kann optisch leichter unterschieden werden, welche Stellscheibe zur Stellmutter und welche Stellscheibe zum Gewindering gehört. Alternativ oder zusätzlich kann diese optische Unterscheidung durch eine unterschiedliche farbige Markierung der Stellscheiben erzeugt werden.

Es hat sich bewährt, dass die vordere Stellscheibe Markierungen aufweist, die die Drehrichtung der vorderen Stellscheibe zur Einstellung der Klemmstellung und der Offenstellung der Klemmvorrichtung anzeigen. Diese Markierungen können beispielsweise Symbole sein, die ebenfalls die optische Unterscheidbarkeit bei der manuellen Bedienung unterstützen. Durch eine klare optische Zuordnung der beiden Stellscheiben ist eine schnelle und fehlerarme Bedienung der Stellscheiben möglich.

Es kann vorgesehen sein, dass in die Klemmvorrichtung ein Erweiterungsset zur Veränderung, insbesondere Vergrößerung des Aufnahmedurchmessers der Wickelhülsen einsetzbar ist.

Weiter kann vorgesehen sein, dass das Erweiterungsset eine mit dem Gewindering verbindbare Ausgleichsscheibe und eine mit der Nutwelle verbindbare Stützscheibe umfasst. Das Erweiterungsset kann mehrere Sätze von Ausgleichsscheiben und Stützscheiben umfassen. Durch dieses Erweiterungsset kann der Außendurchmesser der Klemmvorrichtung, je nach Außendurchmesser der Ausgleichsscheibe und der Stützscheibe insbesondere so vergrößert werden, dass Wickelhülsen mit größerem Innendurchmesser (entsprechend dem angepassten Außendurchmesser von Ausgleichsscheibe und Stützscheibe) mit der Klemmvorrichtung festklemmbar sind.

Es kann vorgesehen sein, dass die Ausgleichsscheibe drei um 120° versetzt angeordnete radiale Führungsnuten zur Aufnahme von Klemmschiebern aufweist, die in der Klemmstellung der Klemmvorrichtung durch die Klemmhebel unter Ausbildung einer Klemmkraft an der Innenwand der Wickelhülse zur Anlage gebracht sind.

Die Klemmschieber können an ihrem Außenumfang eine Aufnahmenut aufweisen, in der ein die Klemmschieber umgreifender O-Ring angeordnet ist.

Die Erfindung wird nun anhand von Ausführungsbeispielen näher erläutert. Es zeigen
- Fig. 1: eine Vorderansicht der erfindungsgemäßen Klemmvorrichtung;
- Fig. 2: eine auf der Klemmvorrichtung in Fig. 1 klemmbare Folienrolle in einer schematischen Schnittdarstellung;
- Fig. 3a: ein erstes Ausführungsbeispiel der Klemmvorrichtung in Fig. 1 in Offenstellung in einer Teilschnittansicht längs der Schnittlinie A-A in Fig. 1;
- Fig. 3b: die Klemmvorrichtung in Fig. 3a in Klemmstellung;
- Fig. 4: ein zweites Ausführungsbeispiel der Klemmvorrichtung in Fig. 1 in einer Schnittansicht längs der Schnittlinie A-A in Fig. 1;
- Fig. 5a: die Klemmvorrichtung in Fig. 4 in Offenstellung in einer Teilschnittansicht;
- Fig. 5b: die Klemmvorrichtung Fig. 5a in Klemmstellung.

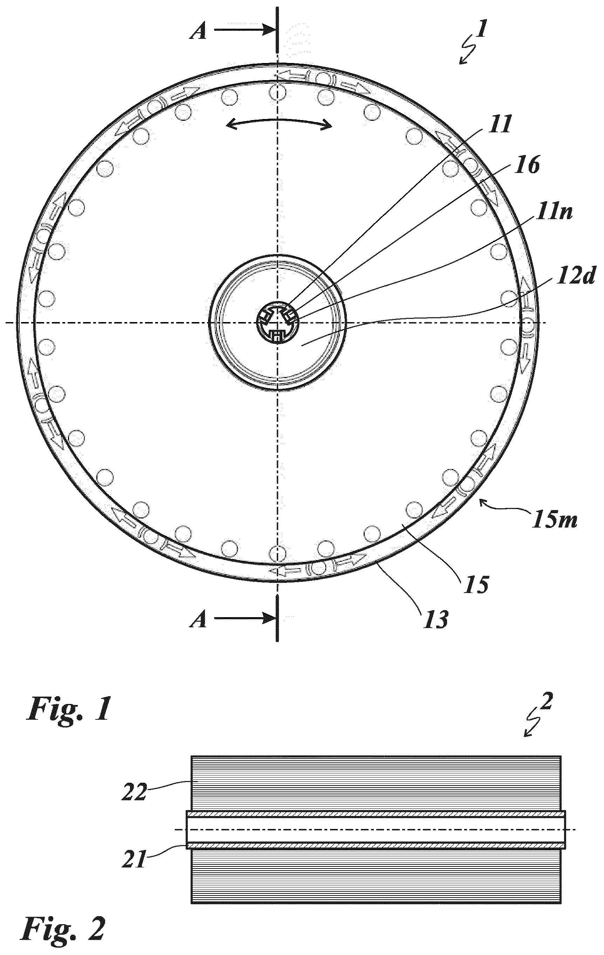

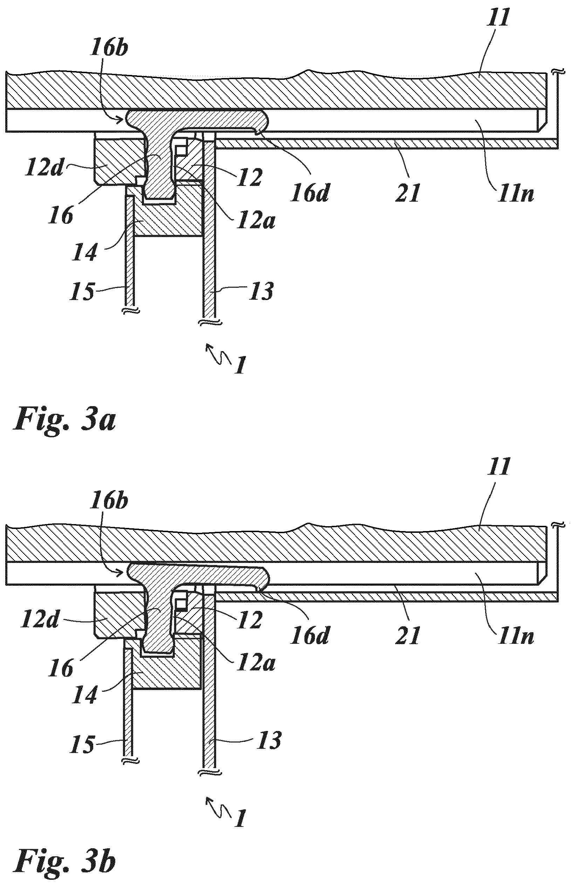

Fig. 1 und 3 zeigen eine Klemmvorrichtung 1 zur Aufnahme und Klemmung einer Folienrolle 2, die eine Wickelhülse 21 und einen auf der Wickelhülse 21 angeordneten Folienwickel 22 umfasst (Fig. 2). Der Innendurchmesser der Wickelhülse 21 kann vorzugsweise 1" oder 3" betragen. Die Länge der Wickelhülse 21 kann vorzugsweise im Bereich von 10 mm bis 1000 mm liegen. Der maximale Durchmesser des Folienwickels 22 kann vorzugsweise 300 mm betragen.

Die Klemmvorrichtung 1 umfasst eine Nutwelle 11, einen Gewindering 12, eine hintere Stellscheibe 13, eine Stellmutter 14, eine vordere Stellscheibe 15 und drei Klemmhebel 16 (Fig. 3).

Die Fig. 3a und 3b zeigen in einer Teilschnittansicht längs der Schnittlinie A-A in Fig. 1 ein erstes Ausführungsbeispiel der Klemmvorrichtung. Dargestellt ist nur der Abschnitt der Klemmvorrichtung 1 unterhalb der Längsachse der Nutwelle 11, in dem die Einzelheiten zur Funktion der Klemmvorrichtung erkennbar sind.

Die in Fig. 3a und 3b dargestellte Klemmvorrichtung 1 ist zur Aufnahme und Klemmung von Wickelhülsen 21 mit 1" Innendurchmesser vorgesehen.

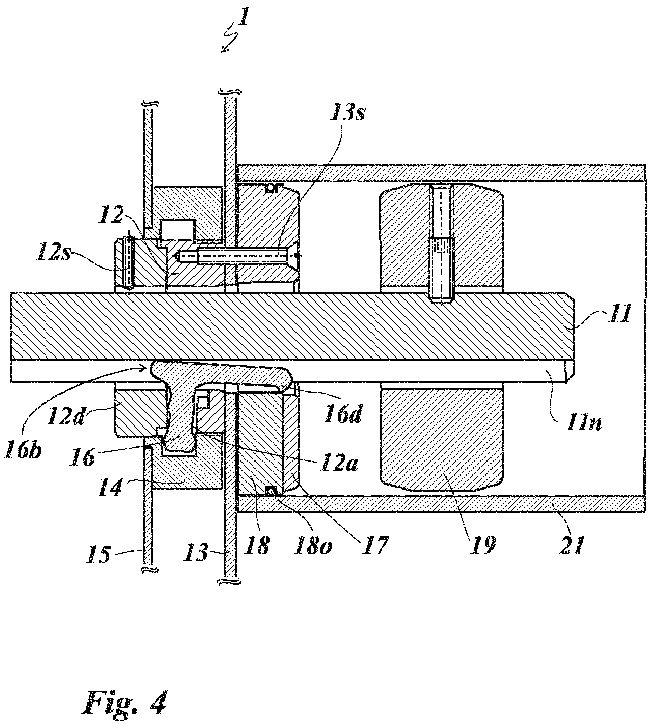

Der Gewindering 12 ist mit der hinteren Stellscheibe 13 drehstarr verbunden, beispielsweise mittels einer oder mehrerer Befestigungsschrauben 13s, wie in Fig. 4 dargestellt. Ein Außengewinde des Gewinderings 12 greift in ein Innengewinde der Stellmutter 14 ein. Die Stellmutter 14 und der Gewindering 12 bilden ein selbsthemmendes Schraubgetriebe, das durch die Stellscheiben 13, 15 manuell betätigbar ist. Die hintere Stellscheibe 13 ist gestellfest ausgebildet. Bei Drehung der vorderen Stellscheibe 15 entgegen dem Uhrzeigersinn gelangen die Klemmhebel 16 der Klemmvorrichtung 1 in eine Offenstellung, in der die Folienrolle 2 in die Klemmvorrichtung 1 einsetzbar ist oder aus der Klemmvorrichtung 1 entnehmbar ist. Die Wickelhülse 21 der in die Klemmvorrichtung 1 eingesetzten Folienrolle 2 übergreift die Nutwelle 11 und liegt mit einer Stirnseite an der hinteren Stellscheibe 13 an.
Bei Drehung der vorderen Stellscheibe 15 im Uhrzeigersinn gelangen die Klemmhebel 16 der Klemmvorrichtung 1 in eine Klemmstellung, in der die Folienrolle 2 drehstarr mit der Klemmvorrichtung 1 verbunden ist. Die vordere Stellscheibe 15 weist auf ihrem äußeren Randabschnitt Markierungen 15m auf, die den Bedienungsvorgang verdeutlichen (Fig. 1). Mit Hilfe dieser Markierungen 15m und/oder beispielsweise einer unterschiedlichen Farbe der Stellscheiben 13, 15 kann eine schnelle und fehlerarme Bedienung der Klemmvorrichtung 1 erfolgen.
Der Gewindering 12 weist drei radial angeordnete und um 120° versetzte nutförmige Lagerausnehmungen 12a zur Aufnahme der Klemmhebel 16 auf. Der Gewindering 12 ist frontseitig von einem Abdeckring 12d überdeckt. Der Gewindering 12 und der Abdeckring 12d können einstückig ausgebildet sein. Die Stellmutter 14 ist mit der vorderen Stellscheibe 15 drehstarr verbunden. Die Stellmutter 14 weist an ihrem Außenumfang drei um 120° versetzte nutförmige Stellausnehmungen auf, in die die Klemmhebel 16 wie weiter unten beschrieben eingreifen.
Die Nutwelle 11 weist drei in Längsrichtung angeordnete und um 120° versetzte Nuten 11 n auf, in die die Klemmhebel 16 eingreifen. Die Nutwelle 11 n kann beispielsweise als eine Rundwelle oder eine Sechskantwelle ausgebildet sein. Die Ausbildung als Sechskantwelle weist den Vorteil auf, dass die Nutwelle 11 n mittels eines Schraubenschlüssels fixierbar ist. Für ein 1" Eckenmaß ist beispielsweise Schlüsselweite 22 zu wählen.

Die Klemmhebel 16 sind als T-förmige Winkelhebel mit einem ersten und einem zweiten Hebelarm ausgebildet, wobei der zweite Hebelarm von dem ersten Hebelarm in Richtung der Stellmutter 14 absteht und den ersten Hebelarm in ein längeres und ein kürzeres Teilstück unterteilt. Der Endabschnitt des längeren Teilstücks ist als ein hervorspringendes Druckstück 16d ausgebildet, das in der Klemmstellung der Klemmvorrichtung 1 auf der Innenwand der Wickelhülse 21 aufliegt. Das kürzere Teilstück weist einen bogenförmigen Endabschnitt 16b auf, der in der Klemmstellung der Klemmvorrichtung 1 auf dem Boden der Nut 11 n der Nutwelle 11 aufliegt.
Der zweite Hebelarm des Klemmhebels 16 ist als ein Lager- und Stellarm ausgebildet, der mit seinem gewölbten Mittenabschnitt in der Lagerausnehmung 12a des Gewinderings 12 schwenkbar gelagert ist. Die Lagerausnehmung 12a ist von dem Abdeckring 12d überdeckt. Der Endabschnitt des zweiten Hebelarms des Klemmhebels 16 greift in die Stellausnehmung der Stellmutter 14 ein.
In der Offenstellung der Klemmvorrichtung 1 liegt der erste Hebelarm des Klemmhebels 16 mit seiner Längsseite auf dem Boden der Nut 11 n auf (siehe Fig. 3a). Bei Drehung der vorderen Stellscheibe 15 entgegen dem Uhrzeigersinn wird die Stellmutter 14 von der hinteren Stellscheibe 13 fortbewegt und verschwenkt dabei synchron die Klemmhebel 16, so dass die Klemmhebel 16 in die vorstehend beschriebene Klemmstellung gelangen, in der der erste Hebelarm mit dem Druckstück 16d auf der Innenwand der Wickelhülse 21 und mit dem bogenförmigen Endabschnitt 16b auf dem Boden der Nut 11 n der Nutwelle 11 unter Ausbildung einer Klemmkraft abgestützt ist. Wegen der um 120° versetzten Anordnung der drei Klemmhebel 16 wird dadurch zugleich die Wickelhülse 21 zur Nutwelle 11 zentriert, so dass die Längsachsen der Wickelhülse 21 und der Nutwelle 11 fluchten (siehe Fig. 3b).

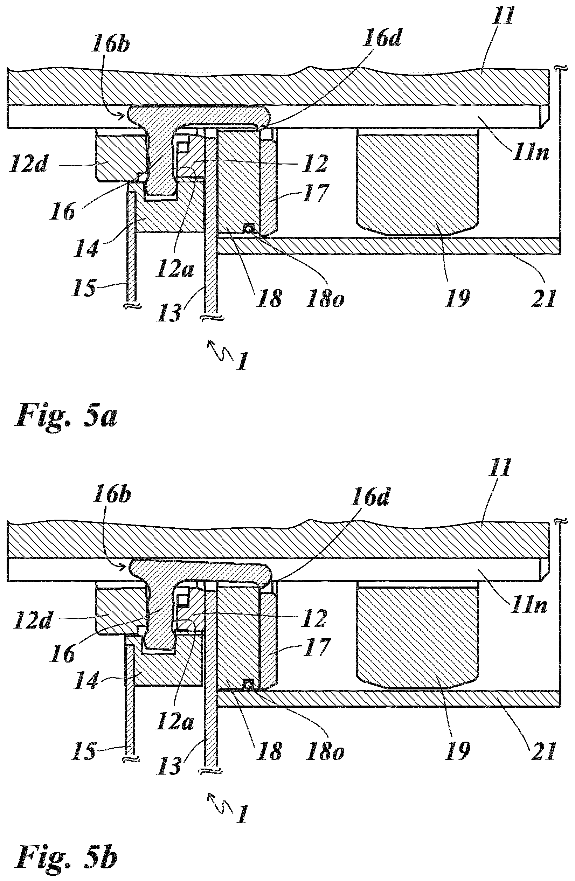

Die Fig. 4, 5a und 5b zeigen ein zweites Ausführungsbeispiel der Klemmvorrichtung, die zur Aufnahme und Klemmung von Wickelhülsen 21 mit einem Innendurchmesser von 3" vorgesehen ist.

Eine Klemmvorrichtung 1 ist in Fig. 4, 5a und 5b wie die weiter oben in den Fig. 3a und 3b beschriebene Klemmvorrichtung ausgebildet, mit dem Unterschied, dass die Klemmvorrichtung 1 weiter einen Ausgleichsscheibe 17, drei Klemmschieber 18, einen O-Ring 18o und eine Stützscheibe 19 umfasst, wie in Fig. 4 dargestellt.

Die Ausgleichsscheibe 17 ist drehstarr mit dem Gewindering 12 verbunden und weist drei radial angeordnete und um 120° versetzte Führungsausnehmungen zur Aufnahme der Klemmschieber 18 auf. Die Klemmschieber 18 sind so angeordnet, dass sie mit den Klemmhebeln 16 zusammenwirken und die Klemmkräfte von den Klemmhebeln 16 auf die Innenwand der Wickelhülse 21 übertragen. Die Klemmschieber 18 weisen an ihrer Außenwand eine Aufnahmenut zur Aufnahme des O-Rings 18o auf, der die Klemmschieber 18 umgreift und in der Offenstellung in Richtung auf die Nutwelle 11 zurückstellt. Vorzugsweise besteht der O-Ring 18o aus einem gummielastischen Material, das zum Einen die Klemmschieber 18 in die Offenstellung zurückstellt und zum Anderen in der Klemmstellung den Reibungskoeffizient zwischen dem Klemmschieber 18 und der Innenwand der Wickelhülse 21 erhöht.

Wie Versuche gezeigt haben, ist bei beiden Ausbildungsvarianten eine Klemmkraft von ca. 1 kN einstellbar. Die notwendige Klemmkraft ist u. a. abhängig vom Reibungskoeffizient des Materials der Wickelhülse 21. Vorzugsweise werden Pappe oder Kunststoff als Material der Wickelhülse 21 eingesetzt. Als Material für die Klemmvorrichtung 1, insbesondere für die Klemmhebel 16 und die Klemmschieber 18, ist Stahl bevorzugt. Auch ein Kunststoff geeigneter Festigkeit kann als Material vorgesehen sein.

Sowohl in der in Fig. 4 dargestellten Ausführung als auch in der weiter oben in Fig. 3a und 3b beschriebenen Ausführung weist der Abdeckring 12d ein radiales Gewindeloch auf, in das eine als Stiftschraube ausgebildete Feststellschraube 12s eingreift. Diese Feststellschraube arretiert die Klemmvorrichtung 1 auf der Nutwelle 11, wenn die Klemmung offen ist. Dies erleichtert das Handling, damit nicht jedes Mal, wenn die Klemmung zum Tausch der Folienrolle 2 geöffnet wird, die Klemmvorrichtung in der Positionierung angepasst werden muss, weil sie auf der Nutwelle 11 verrutscht ist. Die Feststellschraube 12s ist optional, weil die Klemmung auch ohne die Feststellschraube funktioniert. Ohne die Feststellschraube 12s würde die Klemmvorrichtung aber jedes Mal beim Tausch der Folienrolle 2 die gewünschte horizontale Position auf der Nutwelle 11 "verlieren", die für den Einzug der jeweiligen Folienrolle 2 nötig ist.

### Bezugszeichenliste

- 1: Klemmvorrichtung
- 2: Folienrolle
- 11: Nutwelle
- 11n: Nut
- 12: Gewindering
- 12a: Lagerausnehmung
- 12d: Abdeckring
- 12s: Feststellschraube
- 13: hintere Stellscheibe
- 13s: Befestigungsschraube
- 14: Stellmutter
- 15: vordere Stellscheibe
- 15m: Markierung
- 16: Klemmhebel
- 16b: bogenförmiger Endabschnitt
- 16d: Druckstück
- 17: Ausgleichsscheibe
- 18: Klemmschieber
- 18o: O-Ring
- 19: Stützscheibe
- 21: Wickelhülse
- 22: Folienwickel

## Patentansprüche

1. Klemmvorrichtung (1) zur Aufnahme und Klemmung einer Folienrolle (2), umfassend eine Wickelhülse (21) und einen auf der Wickelhülse (21) angeordneten Folienwickel (22), wobei die Klemmvorrichtung (1) von einer Offenstellung, in der die Folienrolle (2) in die Klemmvorrichtung (1) einsetzbar oder aus der Klemmvorrichtung (1) entnehmbar ist, in eine Klemmstellung, in der die Folienrolle (2) in der Klemmvorrichtung (1) geklemmt ist, verstellbar ist,
wobei die Klemmvorrichtung (1) eine Nutwelle (11) mit im gleichen Winkelabstand versetzt in Längsrichtung angeordneten Aufnahmenuten (11n), ein aus einem Gewindering (12) und einer Stellmutter (14) gebildetes Schraubgetriebe und im gleichen Winkelabstand versetzt radial angeordnete Klemmhebel (16) umfasst,
wobei ein Abtriebsglied des Schraubgetriebes mit den Klemmhebeln (16) so zusammenwirkt,
dass die Klemmhebel (16) in der Klemmstellung der Klemmvorrichtung (1) unter Ausbildung einer Klemmkraft auf dem Boden der Nuten (11 n) der Nutwelle (11) und auf der Innenwand der Wickelhülse (21) aufliegen,
**dadurch gekennzeichnet,**
**dass** die Nutwelle (11) drei um 120° versetzt in Längsrichtung angeordneten Aufnahmenuten (11 n) aufweist, in die drei um 120° versetzt radial angeordnete Klemmhebel (16) eingreifen, und dass der Gewindering (12) drei um 120° versetzte radial angeordnete nutförmige Lagerausnehmungen (12a) aufweist, die Drehlager für die Klemmhebel (16) bilden, und
**dass** die Stellmutter (14) an ihrem Außenumfang drei um 120° versetzte nutförmige Stellausnehmungen aufweist, in die die Klemmhebel (16) eingreifen.

2. Klemmvorrichtung nach Anspruch 1,
**dadurch gekennzeichnet,**
**dass** die Stellmutter (14) das Abtriebsglied des Schraubgetriebes ist.

3. Klemmvorrichtung nach Anspruch 1 oder 2,
**dadurch gekennzeichnet,**
**dass** die Klemmhebel (16) als T-förmige Winkelhebel mit einem ersten und einem zweiten Hebelarm ausgebildet sind, wobei der zweite Hebelarm von dem ersten Hebelarm absteht und den ersten Hebelarm in ein längeres und ein kürzeres Teilstück unterteilt.

4. Klemmvorrichtung nach Anspruch 3,
**dadurch gekennzeichnet,**
**dass** der Endabschnitt des längeren Teilstücks des ersten Hebelarms des Klemmhebels (16) als ein hervorspringendes Druckstück (16d) ausgebildet ist, das in der Klemmstellung der Klemmvorrichtung (1) auf der Innenwand der Wickelhülse (21) aufliegt,
**dass** das kürzere Teilstück des ersten Hebelarms des Klemmhebels (16) einen bogenförmigen Endabschnitt (16b) aufweist, der in der Klemmstellung der Klemmvorrichtung (1) auf dem Boden der Nut (11 n) der Nutwele (11) aufliegt,
**dass** ein bogenförmig hervorspringender Mittelabschnitt des zweiten Hebelarms des Klemmhebels (16) in die nutförmige Lagerausnehmung (12a) des Gewinderings (12) eingreift, und
**dass** der Endabschnitt des zweiten Hebelarms des Klemmhebels (16) in die Stellausnehmung der Stellmutter (14) eingreift.

5. Klemmvorrichtung nach einem der Ansprüche 1 bis 4,
**dadurch gekennzeichnet,**
**dass** die Gewinde des Gewinderings (12) und der Stellmutter (14) als selbsthemmende Gewinde ausgebildet sind.

6. Klemmvorrichtung nach einem der Ansprüche 1 bis 5,
**dadurch gekennzeichnet,**
**dass** die Klemmvorrichtung (1) eine vordere Stellscheibe (15) und eine der Folienrolle (2) zugewandte hintere Stellscheibe (13) aufweist, wobei die vordere Stellscheibe (15) mit der Stellmutter (14) und die hintere Stellscheibe (13) mit dem Gewindering (12) drehstarr verbunden ist.

7. Klemmvorrichtung nach Anspruch 6,
**dadurch gekennzeichnet,**
**dass** die vordere Stellscheiben (15) einen kleineren Durchmesser aufweist als die hintere Stellscheibe (13).

8. Klemmvorrichtung nach Anspruch 6 oder 7,
**dadurch gekennzeichnet,**
**dass** die vordere Bordscheibe (15) Markierungen (15m) aufweist, die die Drehrichtung der vorderen Bordscheibe (15) zur Einstellung der Klemmstellung und der Offenstellung der Klemmvorrichtung (1) anzeigen.

9. Klemmvorrichtung nach einem der Ansprüche 1 bis 8,
**dadurch gekennzeichnet,**
**dass** in die Klemmvorrichtung (1) ein Erweiterungsset zur Erweiterung des Aufnahmedurchmessers der Wickelhülsen (21) einsetzbar ist.

10. Klemmvorrichtung nach Anspruch 9,
**dadurch gekennzeichnet,**
**dass** das Erweiterungsset eine mit dem Gewindering (12) verbindbare Ausgleichsscheibe (17) und eine mit der Nutwelle (11) verbindbare Stützscheibe (19) umfasst.

11. Klemmvorrichtung nach Anspruch 10,
**dadurch gekennzeichnet,**
**dass** die Ausgleichsscheibe (17) drei um 120° versetzt angeordnete radiale Führungsnuten zur Aufnahme von Klemmschiebern (18) aufinreist, die in der Klemmstellung der Klemmvorrichtung (19) durch die Klemmhebel (16) unter Ausbildung einer Klemmkraft an der Innenwand der Wickelhülse (21) zur Anlage gebracht sind.

12. Klemmvorrichtung nach Anspruch 11,
**dadurch gekennzeichnet,**
**dass** die Klemmschieber (18) an ihrem Außenumfang eine Aufnahmenut aufweisen, in der ein die Klemmschieber (18) umgreifender O-Ring (18o) angeordnet ist.

## Claims

1. Clamping device (1) for receiving and clamping a film roll (2), comprising a reel core (21) and a film reel (22) arranged on the reel core (21), wherein the clamping device (1) is able to be adjusted from an open position in which the film roll (2) is able to be inserted into the clamping device (1) or is able to be removed from the clamping device (1), into a clamped position in which the film roll (2) is clamped in the clamping device (1),
wherein the clamping device (1) comprises a spline shaft (11) having receiving grooves (11n) arranged with displacement in the longitudinal direction at the same angular distance, a worm gear formed from a threaded ring (12) and an adjusting nut (14), and clamping levers (16) arranged with radial displacement at the same angular distance,
wherein an output member of the worm gear interacts with the clamping levers (16) in such a way
that the clamping levers (16) are supported in the clamping position of the clamping device (1), forming a clamping force on the base of the grooves (11n) of the spline shaft (11), and on the inner wall of the reel core (21),
**characterised in that**
the spline shaft (11) has three receiving grooves (11n) arranged with 120° displacement in the longitudinal direction, with which three clamping levers (16) arranged with 120° radial displacement engage, and
the threaded ring (12) has three groove-like bearing recesses (12a) arranged with 120° radial displacement, said recesses forming pivot bearings for the clamping lever (16), and the adjusting nut (14) has groove-like adjustment recesses with 120° displacement on its outer periphery, with which the clamping levers (16) engage.

2. Clamping device according to claim 1,
**characterised in that**
the adjusting nut (14) is the output member of the worm gear.

3. Clamping device according to claim 1 or 2,
**characterised in that**
the clamping levers (16) are formed as T-shaped angle levers having a first and a second lever arm, wherein the second lever arm projects from the first lever arm and divides the first lever arm into a longer and a shorter part.

4. Clamping device according to claim 3,
**characterised in that**
the end section of the longer part of the first lever arm of the clamping lever (16) is formed as prominent pressure fitting (16d) which is supported on the inner wall of the reel core (21) in the clamped position of the clamping device (1),
the shorter part of the first lever arm of the clamping lever (16) has an arched end section (16b) which is supported on the base of the groove (11n) of the spline shaft (11) in the clamped position of the clamping device (1),
an arched, prominent central section of the second lever arm of the clamping lever (16) engages with the groove-like bearing recess (12a) of the threaded ring (12), and
the end section of the second lever arm of the clamping lever (16) engages with the adjustment recess of the adjusting nut (14).

5. Clamping device according to one of claims 1 to 4,
**characterised in that**
the threads of the threaded ring (12) and the adjusting nut (14) are formed as self-locking threads.

6. Clamping device according to one of claims 1 to 5,
**characterised in that**
the clamping device (1) has a front adjusting disc (15) and a rear adjusting disc (13) facing towards the film roll (2), wherein the front adjusting disc (15) is connected rigidly to the adjusting nut (14) and the rear adjusting disc (13) is connected rigidly to the threaded ring (12).

7. Clamping device according to claim 6,
**characterised in that**
the front adjusting disc (15) has a smaller diameter than the rear adjusting disc (13).

8. Clamping device according to claim 6 or 7,
**characterised in that**
the front flanged disc (15) has markings (15m) which display the rotational direction of the front flanged disc (15) for the adjustment of the clamped position and the open position of the clamping device (1).

9. Clamping device according to one of claims 1 to 8,
**characterised in that**
an expansion set for expanding the receiving diameter of the reel cores (21) is able to be inserted into the clamping device (1).

10. Clamping device according to claim 9,
**characterised in that**
the expansion set comprises a compensation disc (17) that is able to be connected to the threaded ring (12) and a support disc (19) that is able to be connected to the spline shaft (11).

11. Clamping device according to claim 10,
**characterised in that**
the compensation disc (17) has three radial guiding grooves arranged with 120° displacement for receiving the clamping disc (18), said guiding grooves being brought into contact with the inner wall of the reel core (21) in the clamped position of the clamping device (19) by the clamping levers (16), forming a clamping force.

12. Clamping device according to claim 11,
**characterised in that**
the clamping discs (18) have a receiving groove on their outer periphery, in which an O-ring (18o) encompassing the clamping discs (18) is arranged.

## Revendications

1. Dispositif de serrage (1) pour la réception et le serrage d'un rouleau de feuille (2), comprenant une douille d'enroulement (21) et un enroulement de feuille (22) agencé sur la douille d'enroulement (21), le dispositif de serrage (1) pouvant être déplacé d'une position ouverte, dans laquelle le rouleau de feuille (2) peut être inséré dans le dispositif de serrage (1) et peut être retiré du dispositif de serrage (1), à une position de serrage, dans laquelle le rouleau de feuille (2) est serré dans le dispositif de serrage (1),
le dispositif de serrage (1) comportant un arbre de rainure (11) avec des rainures de réception (11n) agencées en déport à distance angulaire identique dans le sens longitudinal, un engrenage hélicoïdal formé d'un anneau fileté (12) et d'un écrou de réglage (14) et des leviers de serrage (16) agencés radialement en déport à distance angulaire identique,
un organe de sortie de l'engrenage hélicoïdal coagissant avec les leviers de serrage (16) de sorte
que les leviers de serrage (16) reposent dans la position de serrage du dispositif de serrage (1) en réalisant une force de serrage sur le fond des rainures (11n) de l'arbre de rainure (11) et sur la paroi intérieure de la douille d'enroulement (21),
**caractérisé**
**en ce que** l'arbre de rainure (11) présente trois rainures de réception (11n) agencées en déport de 120° dans le sens longitudinal, dans lesquelles trois leviers de serrage (16) agencés radialement en déport de 120° s'engagent, et
**en ce que** l'anneau fileté (12) présente trois évidements de palier (12a) en forme de rainure agencés radialement en déport de 120° qui forment des paliers rotatifs pour les leviers de serrage (16) et
**en ce que** l'écrou de réglage (14) présente sur sa périphérie extérieure trois évidements de réglage en forme de rainure en déport de 120°, dans lesquels les leviers de serrage (16) s'engagent.

2. Dispositif de serrage selon la revendication 1,
**caractérisé**
**en ce que** l'écrou de réglage (14) est l'organe de sortie de l'engrenage hélicoïdal.

3. Dispositif de serrage selon la revendication 1 ou 2,
**caractérisé**
**en ce que** les leviers de serrage (16) sont réalisés comme des leviers angulaires en forme de T avec un premier et un second bras de levier, le second bras de levier dépassant du premier bras de levier et divisant le premier bras de levier en une pièce partielle plus longue et une pièce partielle plus courte.

4. Dispositif de serrage selon la revendication 3,
**caractérisé**
**en ce que** la section terminale de la pièce partielle plus longue du premier bras de levier du levier de serrage (16) est réalisée comme une pièce de pression (16d) en saillie, qui repose dans la position de serrage du dispositif de serrage (1) sur la paroi intérieure de la douille d'enroulement (21),
**en ce que** la pièce partielle plus courte du premier bras de levier du levier de serrage (16) présente une section d'extrémité (16b) en arc qui repose dans la position de serrage du dispositif de serrage (1) sur le fond de la rainure (11n) de l'arbre de rainure (11),
**en ce qu'**une section médiane en saillie en arc du second bras de levier du levier de serrage (16) s'engage dans l'évidement de palier (12a) en forme de rainure de l'anneau fileté (12) et
**en ce que** la section d'extrémité du second bras de levier du levier de serrage (16) s'engage dans l'évidement de réglage de l'écrou de réglage (14).

5. Dispositif de serrage selon l'une quelconque des revendications 1 à 4,
**caractérisé**
**en ce que** les filets de l'anneau fileté (12) et de l'écrou de réglage (14) sont réalisés comme des filets autobloquants.

6. Dispositif de serrage selon l'une quelconque des revendications 1 à 5,
**caractérisé**
**en ce que** le dispositif de serrage (1) présente un disque de réglage (15) avant et un disque de réglage (13) arrière tourné vers le rouleau de feuille (2), le disque de réglage avant (15) étant relié de manière rigide en rotation à l'écrou de réglage (14) et le disque de réglage arrière (13) étant relié de manière rigide en rotation à l'anneau fileté (12).

7. Dispositif de serrage selon la revendication 6,
**caractérisé**
**en ce que** le disque de réglage avant (15) présente un diamètre inférieur au disque de réglage (13) arrière.

8. Dispositif de serrage selon la revendication 6 ou 7,
**caractérisé**
**en ce que** le disque de bord avant (15) présente des marquages (15m) qui indiquent le sens de rotation du disque de bord avant (15) pour le réglage de la position de serrage et la position ouverte du dispositif de serrage (1).

9. Dispositif de serrage selon l'une quelconque des revendications 1 à 8,
**caractérisé**
**en ce qu'**un ensemble d'élargissement peut être inséré dans le dispositif de serrage (1) pour l'élargissement du diamètre de réception des douilles d'enroulement (21).

10. Dispositif de serrage selon la revendication 9,
**caractérisé**
**en ce que** l'ensemble d'élargissement comporte un disque de compensation (17) reliable à l'anneau fileté (12) et un disque d'appui (19) reliable à l'arbre de rainure (11).

11. Dispositif de serrage selon la revendication 10,
**caractérisé**
**en ce que** le disque de compensation (17) présente trois rainures de guidage radiales agencées en déport de 120° pour la réception de coulisseaux de serrage (18) qui sont amenés en appui dans la position de serrage du dispositif de serrage (19) par les leviers de serrage (16) en réalisant une force de serrage sur la paroi intérieure de la douille d'enroulement (21).

12. Dispositif de serrage selon la revendication 11,
**caractérisé**
**en ce que** les coulisseaux de serrage (18) présentent sur leur périphérie extérieure une rainure de réception, dans laquelle un joint torique (18o) entourant les coulisseaux de serrage (18) est agencé.
